# EUROPÄISCHE PATENTANMELDUNG

(11) **EP 2 216 661 A1**
(43) Veröffentlichungstag der Anmeldung: **11.08.2010**
(21) Anmeldenummer: 09001782.3
(22) Anmeldetag: 09.02.2009
(51) Int. Cl.: G01S 7/481, G01S 17/48

(54) **Optischer Sensor zum Nachweis von Objekten in einem Überwachungsbereich**

(71) Anmelder: Pepperl + Fuchs GmbH, 68307 Mannheim (DE)
(72) Erfinder: Chin, Kin Hing, Singapore 689097 (SG); Thien, Marcus, Singapore 61033 (SG)
(74) Vertreter: Schiffer, Axel Martin

(57) **Zusammenfassung**

Die vorliegende Erfindung betrifft einen optischen Sensor zum Nachweis von Objekten in einem Überwachungsbereich mit einer Sendeeinheit zum Aussenden von Sendelicht in den Überwachungsbereich, mit einer Detektoreinheit zum Nachweis von aus dem Überwachungsbereich zurückgestrahltem Detektionslicht und mit einer Steuer- und Auswerteeinheit zum Ansteuern der Sendeeinheit und zum Auswerten des von der Detektoreinheit nachgewiesenen Detektionslichts. Der optische Sensor ist dadurch gekennzeichnet, dass zum Leiten des Detektionslichts vom Überwachungsbereich in Richtung der Detektoreinheit mindestens eine erste optische Empfangsfaser und mindestens eine zweite optische Empfangsfaser vorhanden ist, dass die Detektoreinheit zum Nachweis von durch die erste optische Empfangsfaser und die zweite optische Empfangsfaser transmittierten Lichtintensitäten eingerichtet ist und dass die erste optische Empfangsfaser im Vergleich zur zweiten optischen Empfangsfaser bezogen auf eine durch das Sendelicht gegebene optische Achse eine unterschiedliche abstandsabhängige Eintrittscharakteristik für aus dem Überwachungsbereich zurückgestrahltes Detektionslicht aufweist.

## Beschreibung

Die vorliegende Erfindung betrifft einen optischen Sensor zum Nachweis von Objekten in einem Überwachungsbereich nach dem Oberbegriff des Anspruchs 1.

Solche optischen Sensoren sind in zahlreichen Varianten bekannt und werden für eine große Vielzahl von Aufgabenstellungen, insbesondere in der industriellen Fertigungs- und Automatisierungstechnik, eingesetzt.

Ein gattungsgemäßer optischer Sensor weist eine Sendeeinheit zum Aussenden von Sendelicht in den Überwachungsbereich, eine Detektoreinheit zum Nachweis von aus dem Überwachungsbereich zurückgestrahltem Detektionslicht und eine Steuer- und Auswerteeinheit zum Ansteuern der Sendeeinheit und zum Auswerten des von der Detektoreinheit nachgewiesenen Detektionslichts auf.

Das Messprinzip besteht bei Sensoren dieser Art grundsätzlich darin, von einem Objekt im Überwachungsbereich zurückgestrahltes Detektionslicht nachzuweisen und auszuwerten. Um dabei Fehlschaltungen zu vermeiden, die beispielsweise von weit entfernt liegenden, dafür aber sehr stark zurückstrahlenden, insbesondere spiegelnden, Objekten herrühren können, ist es grundsätzlich bekannt, Maßnahmen dafür zu treffen, dass zurückgestrahltes Detektionslicht nur in einem gewissen Messbereich, der auch als Vordergrund bezeichnet wird, nachzuweisen und auszuwerten. Von weiter entfernt liegenden Objekten zurückgestrahltes Licht wird dabei nicht berücksichtigt oder ausgeblendet. Solche Verfahren werden auch als Hintergrundausblendung bezeichnet.

Ein typisches Beispiel für einen optischen Aufbau, mit dem eine Hintergrundausblendung bewerkstelligt werden kann, ist der sogenannte Triangulationssensor. Hier wird ein ortsauflösender Detektor verwendet, beispielsweise ein Mehrsegmentdetektor oder ein positionsempfindlicher Detektor (PSD). Dieser Detektor ist versetzt zu einer durch das Sendelicht gegebenen optischen Achse angeordnet, so dass von einem Objekt zurückgestrahltes Licht auf unterschiedliche Bereiche des Detektors fällt, je nachdem in welchem Abstand sich dieses Objekt zum Sensor befindet. Triangulationssensoren sind im Hinblick auf die Hintergundausblendung zwar effektiv, erfordern aber einen vergleichsweise hohen apparativen Aufwand, insbesondere wenn eine Tastweite variabel einstellbar sein soll.

Als eine Aufgabe der vorliegenden Erfindung kann angesehen werden, einen optischen Sensor der oben genannten Art zu schaffen, bei welchem man in messtechnisch besonders einfacher Weise eine Information darüber erhält, in welcher Entfernung sich ein Objekt, welches Licht zurückstrahlt, von dem Sensor befindet.

Diese Aufgabe wird durch den optischen Sensor mit den Merkmalen des Anspruchs 1 gelöst.

Vorteilhafte Ausgestaltungen des erfindungsgemäßen Sensors sind Gegenstand der abhängigen Ansprüche und werden außerdem in der folgenden Beschreibung, insbesondere im Zusammenhang mit den beigefügten Figuren, beschrieben.

Der optische Sensor der oben genannten Art ist erfindungsgemäß dadurch weitergebildet, dass zum Leiten des Detektionslichts vom Überwachungsbereich in Richtung der Detektoreinheit mindestens eine erste optische Empfangsfaser und mindestens eine zweite optische Empfangsfaser vorhanden ist, dass die Detektoreinheit zum Nachweis von durch die erste optische Empfangsfaser und die zweite optische Empfangsfaser transmittiertem Licht eingerichtet ist und dass die erste optische Empfangsfaser im Vergleich zur zweiten optischen Empfangsfaser bezogen auf eine durch das Sendelicht gegebene optische Achse eine unterschiedliche abstandsabhängige Eintrittscharakteristik für aus dem Überwachungsbereich zurückgestrahltes Detektionslicht aufweist.

Im Rahmen der Erfindung wurde zunächst erkannt, dass sich die Winkelabhängigkeit des Lichteintritts in eine optische Faser in besonders eleganter Weise ausnutzen lässt, um eine Information darüber zu erhalten, in welcher Entfernung sich ein zurückstrahlendes Objekt vom optischen Sensor befindet.

Dies kann jedenfalls dann verwirklicht werden, wenn die Eintrittsfläche der optischen Faser nicht symmetrisch zur optischen Achse des in den Überwachungsbereich eingestrahlten Lichtbündels liegt. Dies ist beispielsweise gegeben, wenn die Eintrittsflächen der optischen Fasern seitlich versetzt und/oder verkippt gegenüber der optischen Achse des in den Überwachungsbereich eingestrahlten Lichtbündels angeordnet sind.

Ein weiterer, der Erfindung zugrundeliegender Kerngedanke besteht darin, jedenfalls mindestens zwei verschiedene optische Empfangsfasern zu verwenden, so dass beispielsweise über eine Differenz- oder Verhältnisbildung der in die beiden optischen Fasern eintretenden Lichtintensitäten eine vergleichsweise präzise Aussage gewonnen werden kann, in welchem Abstand sich das fragliche Objekt vom Sensor befindet.

Ein weiterer wesentlicher Grundgedanke der Erfindung ist schließlich, die erste optische Empfangsfaser und die zweite optische Empfangsfaser so auszuwählen und/oder anzuordnen, dass diese beiden Empfangsfasern bezüglich einer durch das Sendelicht gegebenen optischen Achse eine unterschiedliche Abstandsabhängigkeit der Eintrittscharakteristik für aus dem Überwachungsbereich zurückgestrahltes Detektionslicht aufweisen. Erst dadurch wird beispielsweise die Bildung des Verhältnisses der durch diese beiden Fasern transmittierten Lichtintensität sinnvoll.

Als erster wesentlicher Vorteil der Erfindung kann angesehen werden, dass die erfindungsgemäße Lösung mit äußerst wenigen Komponenten auskommt und deshalb sehr kostengünstige Realisierungen ermöglicht.

Ein weiterer Vorteil kann darin gesehen werden, dass optische Fasern oder Glasfasern in einer großen Zahl von Varianten auf dem Markt erhältlich sind und somit der erfindungsgemäße optische Sensor für praktisch alle Anwendungsfälle rasch angepasst und gefertigt werden kann.

Sensoren der hier beschriebenen Art arbeiten bevorzugt mit rotem Licht und mit Infrarotlicht. Grundsätzlich soll aber mit dem Begriff Licht für die vorliegende Erfindung elektromagnetische Strahlung im sichtbaren Bereich sowie der angrenzenden spektralen Bereiche, also auch Ultraviolett- und insbesondere Infrarotlicht, verstanden werden.

Die Sendeeinheit sendet Licht in den Überwachungsbereich und insbesondere auf dort befindliche nachzuweisende Objekte. Im Hinblick auf das erfindungsgemäße Prinzip, bei dem es sich im Grundsatz um ein Triangulationsmessprinzip handelt, ist dabei zweckmäßig, wenn ein nachzuweisendes Objekt mit einem kleinen Lichtfleck beleuchtet wird. Klein bedeutet in diesem Zusammenhang klein gegen die Abmessungen des Objekts und insbesondere klein im Vergleich zu einem Abstand der Eintrittsöffnungen der Empfangsfasern von der optischen Achse. Der Lichtfleck, der durch ein von einer optischen Faser ausgesandtes Lichtbündel auf einem Objekt erzeugt wird, kann mit zunehmendem Abstand rasch vergleichsweise groß werden, da seine Größe durch den Öffnungswinkel der Faser bestimmt wird.

Bei den optischen Fasern kann es sich grundsätzlich um bekannte und kommerziell erhältliche optische Fasern, insbesondere Glasfasern, handeln. Wegen der besseren Lichttransmission werden bevorzugt Multimode-Fasern verwendet. Grundsätzlich sind aber auch Kunststofffasern mit den gewünschten Eigenschaften erhältlich und können ebensogut verwendet werden.

Die vorstehend erläuterte Anforderung an das Sendelicht kann in einfacher Weise dadurch erreicht werden, dass zum Leiten des Sendelichts in den Überwachungsbereich mindestens eine optische Sendefaser vorhanden ist.

Bei besonders bevorzugten Ausgestaltungen des erfindungsgemäßen optischen Sensors sind die Sendefaser und die Empfangsfasern in einer gemeinsamen Ummantelung untergebracht und können deshalb am Einsatzort besonders einfach positioniert werden.

Die unterschiedliche Abstandsabhängigkeit der Eintrittscharakteristik für aus dem Überwachungsbereich zurückgestrahltes Detektionslicht kann grundsätzlich auf verschiedene Art und Weise erzielt werden.

Bei einer besonders einfachen und eleganten Ausführungsform des erfindungsgemäßen optischen Sensors wird die unterschiedliche abstandsabhängige Eintrittscharakteristik mindestens teilweise bereitgestellt durch unterschiedliche Anordnungsgeometrien der ersten optischen Empfangsfaser und der zweiten optischen Empfangsfaser bezüglich der optischen Achse. Beispielsweise kann dies dadurch erreicht werden, dass die erste optische Empfangsfaser im Vergleich zur zweiten optischen Empfangsfaser bezüglich der optischen Achse mit unterschiedlichem Abstand angeordnet ist. Die Grenzwinkel, bei denen die Intensität der in die Empfangsfasern transmittierten elektromagnetischen Strahlung abnimmt, werden durch den unterschiedlichen axialen Abstand für die beiden optischen Empfangsfasern bei unterschiedlichen Abständen erreicht. Hierdurch kann die gewünschte Orts- oder Tiefeninformation gewonnen und im Prinzip eine Hintergrundausblendung durchgeführt werden. Die optische Achse kann insbesondere die optische Achse der Sendefaser sein.

Grundsätzlich sind auch Ausführungsbeispiele möglich und können für bestimmte Anwendungssituationen von Vorteil sein, bei denen die erste optische Empfangsfaser bezüglich der optischen Achse im Vergleich zur zweiten optischen Empfangsfaser in einem unterschiedlichen Winkel angeordnet ist. Bei solchen Anordnungen können die Abstände zur optischen Achse prinzipiell für die erste optische Empfangsfaser und die zweite optische Empfangsfaser dieselben sein, so dass dabei kompakte und platzsparende Anordnungen möglich sind.

Bei bevorzugten Varianten des erfindungsgemäßen Sensors sind die Empfangsfasern aber in derselben Richtung, insbesondere weitestgehend parallel, ausgerichtet. Besonders bevorzugt ist weiterhin, wenn die Empfangsfasern außerdem parallel zur Sendefaser orientiert sind. Dies lässt sich fertigungstechnisch besonders einfach bewerkstelligen.

Im Hinblick auf die Anzahl von vorzuhaltenden Komponenten ist außerdem von Vorteil, wenn die Sendefaser und/oder die Empfangsfasern baugleiche Fasern sind.

Ein besonderer Vorteil des erfindungsgemäßen optischen Sensors ist außerdem darin zu sehen, dass die erste und die zweite Empfangsfaser oder die entsprechenden Empfangsfaserbündel grundsätzlich keine weiteren optischen Komponenten benötigen.

Um aber in robusten industriellen Einsatzumgebungen Situationen zu vermeiden, bei denen ein Eintrittsende der ersten und/oder der zweiten optischen Empfangsfaser ganz oder teilweise durch Verschmutzung blockiert ist, kann es für solche Einsatzzwecke von Vorteil sein, wenn vor den Eintrittsenden mindestens einer ersten Empfangsfaser und mindestens einer zweiten Empfangsfaser eine Linse angeordnet ist. Hierbei kann es sich insbesondere für zwei optische Empfangsfasern um ein und dieselbe Linse handeln. Ebenso kann für die genannten Einsatzzwecke bevorzugt sein, wenn auch zum Leiten des Sendelichts in den Überwachungsbereich vor einem Austrittsende mindestens einer Sendefaser eine Linse angeordnet ist.

Für Einsatzzwecke, bei denen sehr schwach zurückstrahlende Objekte nachgewiesen werden sollen und demgemäß möglichst viel Licht von den Empfangsfasern aufgenommen werden soll, sind Ausführungsbeispiele von Vorteil, bei denen eine Mehrzahl von ersten Empfangsfasern und zweiten Empfangsfasern vorhanden ist, wobei die ersten Empfangsfasern mit einem ersten Abstand zur optischen Achse und die zweiten Empfangsfasern mit einem zweiten Abstand, der größer ist als der erste Abstand, zur optischen Achse angeordnet sein können.

Bei einer besonders bevorzugten Ausführungsvariante des erfindungsgemäßen Sensors, die sich durch einen besonders kompakten Aufbau auszeichnet, sind genau zwei Empfangsfasern vorhanden.

Eine unterschiedliche abstandsabhängige Eintrittscharakteristik kann alternativ oder ergänzend außerdem bereitgestellt werden durch unterschiedliche physikalische Eigenschaften der ersten optischen Empfangsfaser und der zweiten optischen Empfangsfaser. Beispielsweise können optische Empfangsfasern aus unterschiedlichen Materialien gefertigt sein und/oder unterschiedliche Dicken und/oder unterschiedliche Brechungsindizes aufweisen.

Besonders zweckmäßig ist in diesem Zusammenhang, wenn die erste optische Empfangsfaser und die zweite optische Empfangsfaser unterschiedliche numerische Aperturen, also unterschiedliche Grenzwinkel für das in die optische Faser eintretende Licht, aufweisen.

Darüber hinaus können weitere optische Komponenten, beispielsweise Linsen, verwendet werden, um den Öffnungs- oder Akzeptanzwinkel der Empfangsfasern einzustellen und zu variieren. Hierdurch werden außerdem die Intensitätsmaxima des mit den verschiedenen Empfangsfasern nachgewiesenen Lichts und damit auch ein Nachweisbereich des Sensors beeinflusst. Beispielsweise kann mit solchen optischen Komponenten der Öffnungswinkel eines Strahlbündels aufgeweitet oder verkleinert werden. Auch eine Veränderung des Öffnungs- oder Austrittswinkels der Sendefaser beeinflusst die Maxima der mit den verschiedenen Empfangsfasern nachgewiesenen Intensitäten, insbesondere der mit der Fernfaser oder einem entsprechenden Faserbündel, nachgewiesenen Intensitäten. Diese Maxima werden auch als "gain excess peak" bezeichnet. Auch der Nachweisbereich eines Sensors (englisch: sensing range), also der Abstandsbereich, in welchem der Sensor zweckmäßig eingesetzt werden kann, wird durch eine Variation des Öffnungs- oder Austrittswinkels der Sendefaser verändert.

Eine Anpassung des erfindungsgemäßen optischen Sensors ist in einfacher Weise möglich, wenn die Steuer- und Auswerteeinheit zum Auswerten des von der Detektoreinheit nachgewiesenen Detektionslichts auf Grundlage von eingelernten Werten und zum Abgeben eines binären Schaltsignals eingerichtet ist.

Die durch die erste optische Empfangsfaser und die zweite optische Empfangsfaser oder durch entsprechende Faserbündel geleiteten und in der Detektionseinheit nachgewiesenen Intensitäten des Detektionslichts können beispielsweise einem Differenzverstärker zur Signalauswertung zugeführt werden.

Weitere Vorteile und Merkmale des erfindungsgemäßen optischen Sensors werden mit Bezug auf die Figuren beschrieben. Hierin zeigt:
- Fig. 1 und 2:: ein erstes Ausführungsbeispiel eines erfindungsgemäßen optischen Sensors;
- Fig. 3:: ein Diagramm zur Erläuterung der unterschiedlichen abstandsabhängigen Eintrittscharakteristik für das in den Figuren 1 und 2 gezeigte Ausführungsbeispiel;
- Fig. 4:: in schematischer Ansicht den Eintritts-/Austrittsbereich für Sendelicht und Detektionslicht in dem Ausführungsbeispiel aus den Figuren 1 und 2;
- Fig. 5:: den Eintritts-/Austrittsbereich für Sendelicht und Detektionslicht für ein alternatives Ausführungsbeispiel;
- Fig. 6:: eine schematische Teilansicht eines weiteren Ausführungsbeispiels des erfindungsgemäßen optischen Sensors;
- Fig. 7:: eine Einsatzmöglichkeit eines erfindungsgemäßen optischen Sensors;
- Fig. 8:: eine schematische Teilansicht eines weiteren Ausführungsbeispiels eines erfindungsgemäßen optischen Sensors; und
- Fig. 9:: eine weitere schematische Teilansicht des in Fig. 8 gezeigten Ausführungsbeispiels eines erfindungsgemäßen optischen Sensors.

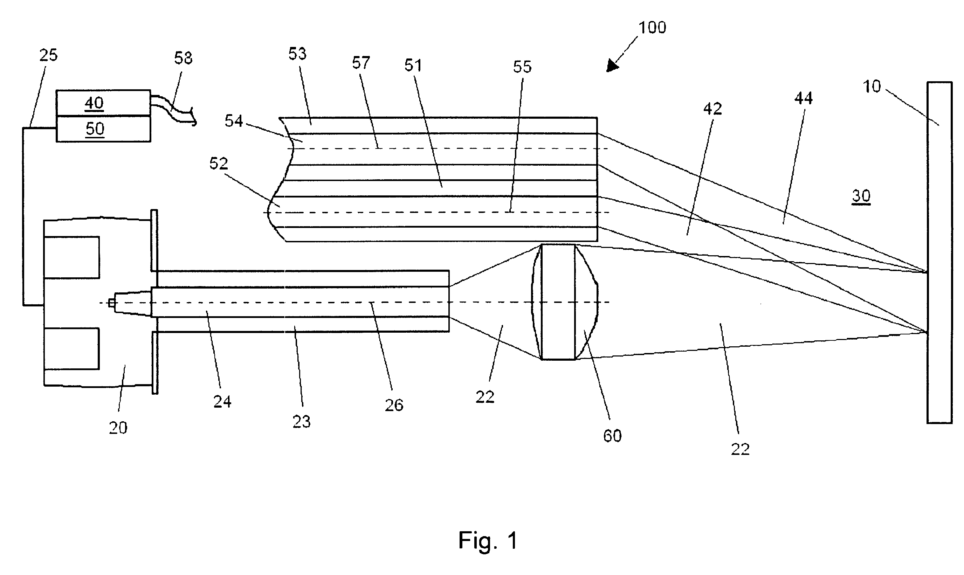

Ein erstes Ausführungsbeispiel eines erfindungsgemäßen optischen Sensors wird mit Bezug auf die Figuren 1, 2 und 4 erläutert.

Äquivalente Komponenten sind in allen Figuren mit denselben Bezugszeichen versehen.

Als wesentliche Bestandteile weist der optische Sensor 100 eine Sendeeinheit 20, eine Detektoreinheit 40 und eine Steuer- und Auswerteeinheit 50 auf. Die Sendeeinheit 20 beinhaltet eine nicht im Einzelnen dargestellte Lichtquelle, beispielsweise eine Laserdiode, und wird über ein Verbindungskabel 25 von der Steuer- und Auswerteeinheit 50 angesteuert. Grundsätzlich können als Lichtquellen auch Leuchtdioden verwendet werden. Eine optische Sendefaser 24 ist an die Sendeeinheit 20 angeschlossen und leitet Sendelicht 22 über eine Linse 60 in einen Überwachungsbereich 30. Eine Umhüllung der Sendefaser 24 ist mit dem Bezugszeichen 23 versehen.

Zum Leiten von Detektionslicht vom Überwachungsbereich 30 in Richtung der Detektoreinheit 40 sind eine erste optische Empfangsfaser 52 und eine zweite optische Empfangsfaser 54, deren Ummantelungen mit den Bezugszeichen 51 beziehungsweise 53 versehen sind, vorhanden. Die erste optische Empfangsfaser 52 und die zweite optische Empfangsfaser 54 sind über ein Faserkabel 58 mit der Detektoreinheit 40 verbunden, worin das transmittierte Detektionslicht nachgewiesen und die so generierten Signale weiterverarbeitet werden. Die Detektoreinheit 40 ist ihrerseits wirkungsmäßig mit der Steuer- und Auswerteeinheit 50 verbunden, in der die von der Detektoreinheit 40 nachgewiesenen Lichtintensitäten des Detektionslichts verarbeitet werden und worin ein Schaltsignal generiert wird.

Das Sendelicht 22 trifft im Überwachungsbereich 30 auf ein dort befindliches Objekt 10 und wird von dort in einem ersten Strahlenbündel 42 in Richtung der ersten optischen Empfangsfaser 52 und in einem zweiten Strahlenbündel 44 in Richtung der zweiten optischen Empfangsfaser 54 zurückgestrahlt.

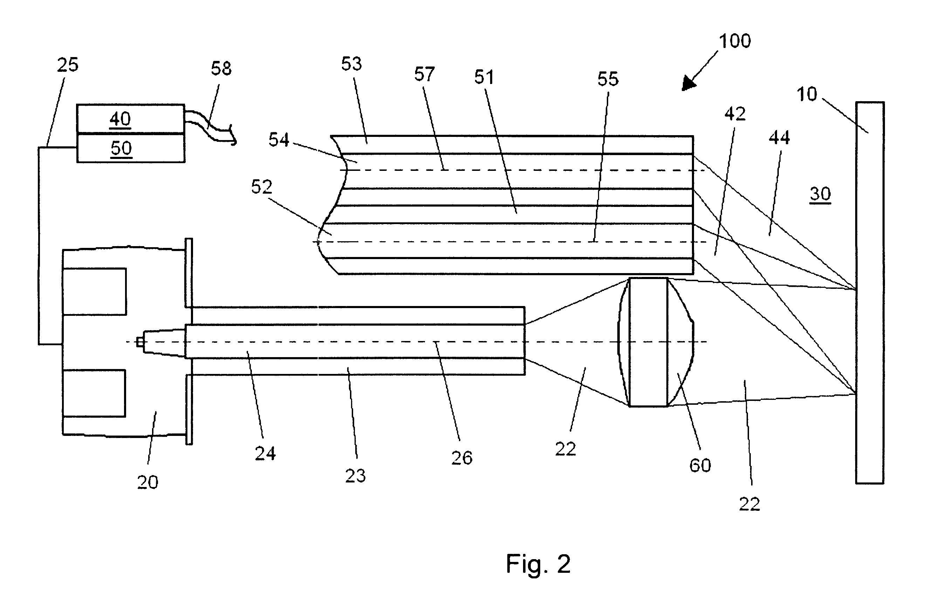

Der einzige Unterschied der in Fig. 2 dargestellten Situation im Vergleich zu Fig. 1 besteht darin, dass der Abstand des Objekts 10 zu den Eintrittsflächen der ersten optischen Empfangsfaser 52 und der zweiten optischen Empfangsfaser 54 sowie der Linse 60 kleiner ist und sich deshalb andere Winkel für das erste Strahlenbündel 42 und das zweite Strahlenbündel 44 ergeben.

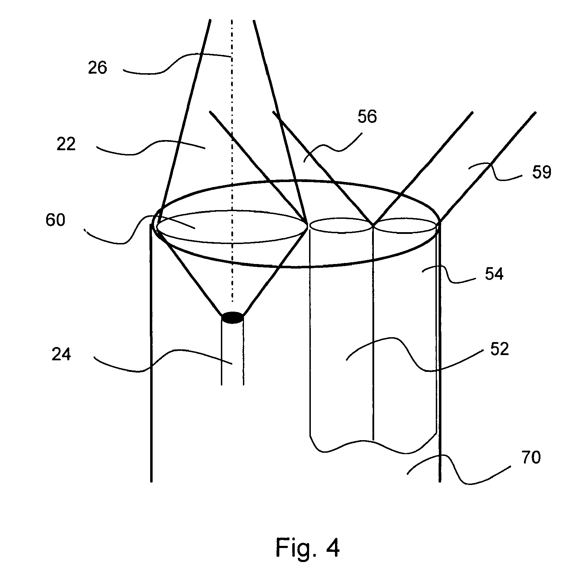

Wie in Fig. 4 gezeigt, sind die erste optische Empfangsfaser 52, die zweite optische Empfangsfaser 54 und die Sendefaser 24 parallel angeordnet und in einer gemeinsamen Umhüllung 70 untergebracht. Ein unter dem Grenzwinkel auf die erste optische Empfangsfaser 52 einfallendes paralleles Strahlenbündel ist in Fig. 4 mit dem Bezugszeichen 56 versehen. Ein entsprechendes paralleles Strahlenbündel 59, welches unter dem Grenzwinkel auf die zweite optische Empfangsfaser 54 fällt, ist ebenfalls eingezeichnet. Die genannten Grenzwinkel stehen in direktem Zusammenhang mit den numerischen Aperturen der jeweiligen optischen Fasern. Im gezeigten Ausführungsbeispiel handelt es sich bei der ersten optischen Empfangsfaser 52 und der zweiten optischen Empfangsfaser 54 um baugleiche Fasern, welche dieselbe numerische Apertur aufweisen.

In dem in den Figuren 1, 2 und 4 gezeigten Aufbau werden drei optische Fasern benutzt. Es handelt sich hierbei um die Sendefaser 24, durch welche eine optische Achse 26 definiert wird, um die erste optische Empfangsfaser 52, die auch als Nahfeldfaser bezeichnet werden kann, sowie um die zweite optische Empfangsfaser 54, die auch als Fernfeld- oder Hintergrundfaser bezeichnet werden kann. Die Nahfeldfaser 52 und die Fernfeldfaser 54 werden zu der Detektoreinheit 40, die auch als Verstärkereinheit bezeichnet werden kann, zurückgeführt.

Ein in der Detektoreinheit 40 enthaltener Verstärker kann eine konventionelle Differenzialdiode oder zwei individuelle Standarddioden für die Signale der ersten optischen Empfangsfaser 52 und die Signale der zweiten optischen Empfangsfaser 54 enthalten. Die Signaldynamik ist dann im Wesentlichen gegeben durch den Öffnungswinkel der optischen Fasern, durch die unterschiedliche räumliche Anordnung der Fasern und/oder die Größe der Fasern.

In einer Messsituation, bei welcher sich das nachzuweisende Objekt 10 in vergleichsweise großem Abstand von den Faserenden befindet, wie dies beispielsweise in Fig. 1 dargestellt ist, fallen das erste Strahlenbündel 42 und das zweite Strahlenbündel 44 beide im Wesentlichen in den Öffnungswinkel der ersten optischen Empfangsfaser 52 beziehungsweise der zweiten optischen Empfangsfaser 54. Dies führt dazu, dass das Signal aus dem Nahfeld, also die durch die erste optische Empfangsfaser 52 transmittierte Intensität im Wesentlichen gleich groß ist oder jedenfalls nicht viel größer ist als die Intensität, welche durch die zweite optische Empfangsfaser 54 transmittiert wird.

Wenn sich das Objekt 10 nun in Richtung der Faserenden und in Richtung der Linse 60 bewegt, wird der Winkel, unter dem das zweite Strahlenbündel 44 auf die außen liegende zweite optische Empfangsfaser 54 auftrifft immer größer und wird schließlich den Öffnungswinkel der zweiten optischen Empfangsfaser 54 nach und nach verlassen. Dies entspricht der in Fig. 2 dargestellten Situation, bei dem der Abstand des Objekts 10 von den Enden der ersten optischen Empfangsfaser 52 und der zweiten optischen Empfangsfaser 54 sowie der Linse 60 etwa 2 mm beträgt.

In Fig. 1 beträgt der Abstand zwischen dem Objekt 10 und den Enden der ersten optischen Empfangsfaser 52 und der zweiten optischen Empfangsfaser 54 sowie der Vorderseite der Linse 60 etwa 6 mm.

Das erste Strahlenbündel 42 fällt aber in Fig. 2 immer noch unter einem Winkel auf die erste optische Empfangsfaser 52, welcher kleiner ist als der Öffnungswinkel dieser ersten optischen Empfangsfaser 52. Das bedeutet insgesamt, dass das Signal aus dem Fernfeld bereits deutlich absinkt und das Signal des Nahfelds immer noch ansteigt, so dass durch Auswertung der Differenz zwischen dem Nahfeldsignal und dem Fernfeldsignal oder durch Bildung eines Verhältnisses des Nahfeldsignals zum Fernfeldsignal ein Sensor mit Hintergrundausblendung geschaffen werden kann. Erfindungsgemäß ist dies dadurch möglich, dass die erste optische Empfangsfaser 52 im Vergleich zur zweiten optischen Empfangsfaser 54 bezogen auf die durch das Sendelicht 22 gegebene optische Achse 26 eine unterschiedliche abstandsabhängige Eintrittscharakteristik für das aus dem Überwachungsbereich 30 zurückgestrahlte Detektionslicht aufweist. In dem in den Figuren 1, 2 und 4 gezeigten Ausführungsbeispiel wird dies dadurch realisiert, dass die zweite optische Empfangsfaser 54, deren Achse mit dem Bezugszeichen 57 versehen ist, in einem größeren Abstand zur optischen Achse 26 positioniert ist, als die erste optische Empfangsfaser 52, deren optische Achse mit dem Bezugszeichen 55 versehen ist.

Prinzipiell kann dieser Aufbau, beispielsweise wenn besonders kleine Lichtintensitäten nachgewiesen werden sollen, auch mit mehreren ersten optischen Empfangsfasern und mehreren zweiten optischen Empfangsfasern verwirklicht werden. Sodann sind auch Aufbauten möglich, bei denen eine innen liegende Sendefaser verwendet wird, an welche sich radial nach außen zunächst ein erster röhrenförmiger Lichtleitbereich, der der ersten optischen Empfangsfaser entspricht, und dann ein zweiter, ebenfalls röhrenförmiger Lichtleitbereich, der der zweiten optischen Empfangsfaser entspricht, anschließt. Hierbei handelt es sich dann um ein koaxiales Glasfaserkabel mit einem mittig liegenden Sendebereich, einem Empfangsbereich für Licht aus dem Nahfeld und einem Empfangsbereich für Licht aus dem Fernfeld.

Bei dem in den Figuren 1, 2 und 4 gezeigten Ausführungsbeispiel können die verwendeten Glasfaser beispielsweise eine numerische Apertur von 0,2 und einen Durchmesser des Faserkerns von 0,5 mm aufweisen. Die Umhüllungen der Fasern sind typischerweise etwa 1 mm dick. Weiterhin kann eine PLCC-4 Infrarotleuchtdiode, welche bei einer Wellenlänge von 880 nm emittiert, als Lichtquelle verwendet werden und am Ende der Sendefaser 24 ist eine Kunststofflinse 60 mit einer Brennweite von 1,53 mm angeordnet, welche das Faserende auf einen 6 mm entfernten Punkt im Überwachungsbereich 30 abbildet.

Durch den Öffnungswinkel der zweiten optischen Empfangsfaser wird in Fig. 2 das zweite Strahlenbündel 44 sozusagen abgeschattet, wodurch im Ergebnis eine Hintergrundausblendung erzielt wird.

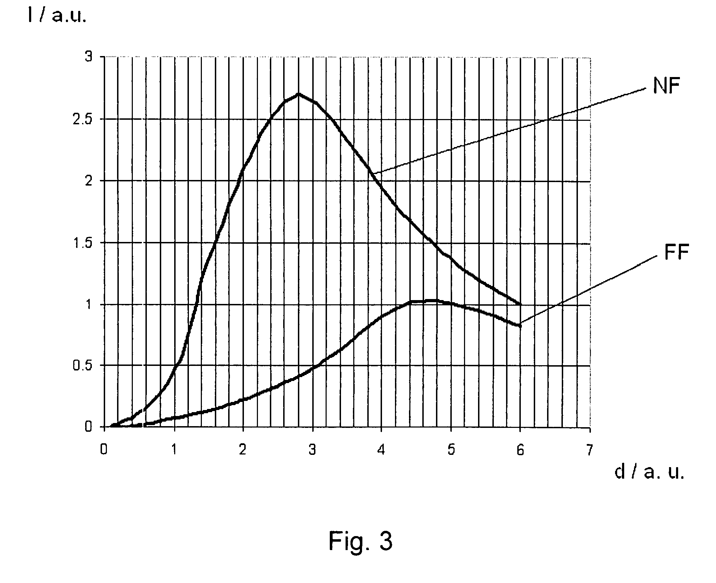

Der Verlauf der in die erste optische Empfangsfaser 52 und die zweite optische Empfangsfaser 54 eingekoppelten Lichtintensitäten ist schematisch in Fig. 3 dargestellt. Dort sind die in der Detektoreinheit 40 nachgewiesenen Intensitäten I in beliebigen Einheiten, a. u., gegenüber dem Abstand d eines Objekts 10 von den Enden der Fasern aufgetragen. Der Verlauf für die in die erste optische Faser 52, also die Nahfeldfaser, eingekoppelten Lichtintensität ist mit dem Bezugszeichen NF und entsprechend der Verlauf der in die zweite optische Empfangsfaser 54 eingekoppelten Lichtintensität mit FF gekennzeichnet.

In Fig. 2 sind folgende wesentlichen Punkte erkennbar. Zunächst ist dort ersichtlich, dass für große Abstände sich die Signale NF und FF annähern, gleichzeitig aber mit zunehmendem Abstand des Objekts immer kleiner werden. Sodann geht aus Fig. 3 hervor, dass das Signal FF mit kleiner werdenden Objektabstand bis zu einem Abstand von etwa 4,6 auf einen Wert von knapp über 1 ansteigt und sodann mit weiter geringer werdenden Abstand schließlich bis auf Null absinkt. Im Vergleich dazu steigt das Signal NF bei kleiner werdenden Objektabstand bis zu einem Abstand von etwa 2,8 auf einen Wert von etwa 2,7 an und sinkt erst danach ab. Hieraus ist unmittelbar ersichtlich, dass die Differenzen oder Verhältnisse der Signale NF und FF verwendet werden können, um eine Information darüber zu erhalten, in welchem Abstand sich ein Objekt vor dem Detektor befindet.

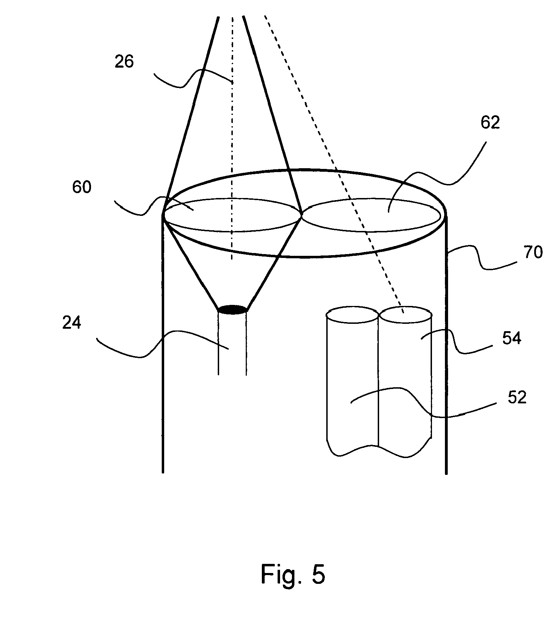

Das in Fig. 5 gezeigte alternative Ausführungsbeispiel unterscheidet sich von dem ersten, in Zusammenhang mit den Figuren 1, 2 und 4 erläuterten Beispiel, dadurch, dass zum Leiten des Detektionslichts auf die erste optische Empfangsfaser 52 und die zweite optische Empfangsfaser 54 eine Linse 62 vorhanden ist. Die erste optische Empfangsfaser 52 und die zweite optische Empfangsfaser 54 sind hierfür in der gemeinsamen Umhüllung 70 etwas zurückgesetzt angeordnet. Diese Variante ist insbesondere zweckmäßig für den Einsatz des erfindungsgemäßen optischen Sensors in robusten industriellen Umgebungen, in denen mit Verschmutzungen der Optik gerechnet werden muss. Während bei dem ersten, im Zusammenhang mit den Figuren 1, 2 und 4 erläuterten Ausführungsbeispiel eine Verschmutzung des Eintrittsbereichs der ersten optischen Empfangsfaser 52 oder der zweiten optischen Empfangsfaser 54 sehr rasch zum völligen Ausfall der entsprechenden Faser führen kann, kann bei dem in Fig. 5 gezeigten Ausführungsbeispiel ein gewisser Verschmutzungsgrad durch die Linse 62 ausgeglichen werden und es sinken dort nur die nachgewiesenen Intensitäten ab.

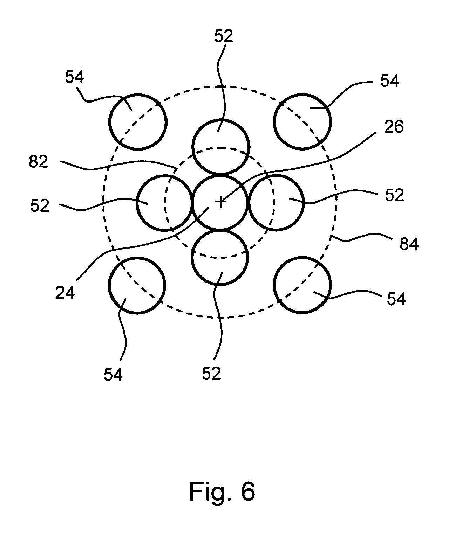

Fig. 6 zeigt eine weitere Variante eines erfindungsgemäßen optischen Sensors. Die Stirnseite eines erfindungsgemäßen optischen Sensors ist dort schematisch dargestellt. Der wesentliche Unterschied dieser Variante im Vergleich zu den bisher beschriebenen Ausführungsformen besteht darin, dass jeweils mehrere erste Empfangsfasern 52 und mehrere zweite Empfangsfasern 54 vorhanden sind. Konkret sind vier erste Empfangsfasern in einem ersten Abstand, der durch einen Kreis 82 angedeutet ist, gleichmäßig um die optische Achse 26 und die Sendefaser 24 angeordnet. Mit größerem Abstand nach außen, der durch einen Kreis 84 angedeutet ist, sind sodann vier zweite Empfangsfasern 54 um die optische Achse 26 angeordnet. Die zweiten Empfangsfasern 54 sind dabei jeweils zwischen zwei ersten Empfangsfasern 52 angeordnet. Hierauf kommt es aber für die Realisierung der Erfindung nicht an. Wesentlich ist auch bei dem in Fig. 6 gezeigten Ausführungsbeispiel, dass die außen positionierten zweiten Empfangsfasern 54 einen größeren Abstand zur optischen Achse 26 aufweisen als die innen positionierten ersten Empfangsfasern 52.

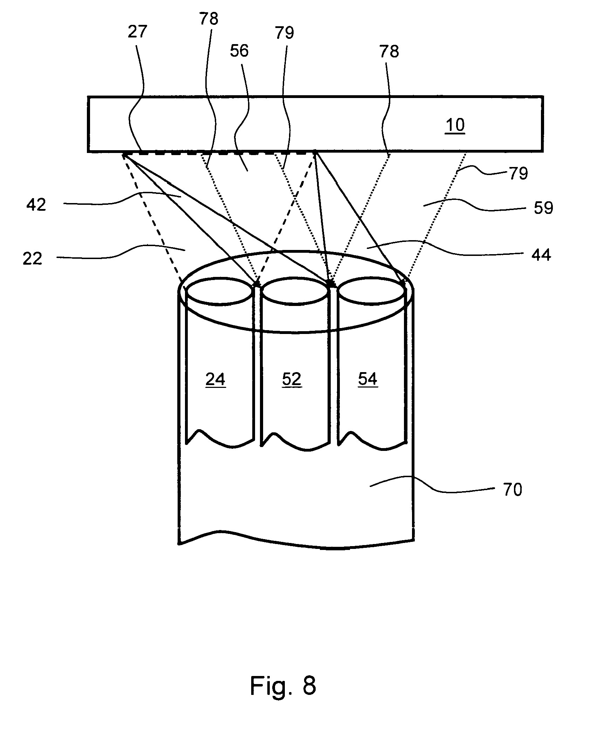

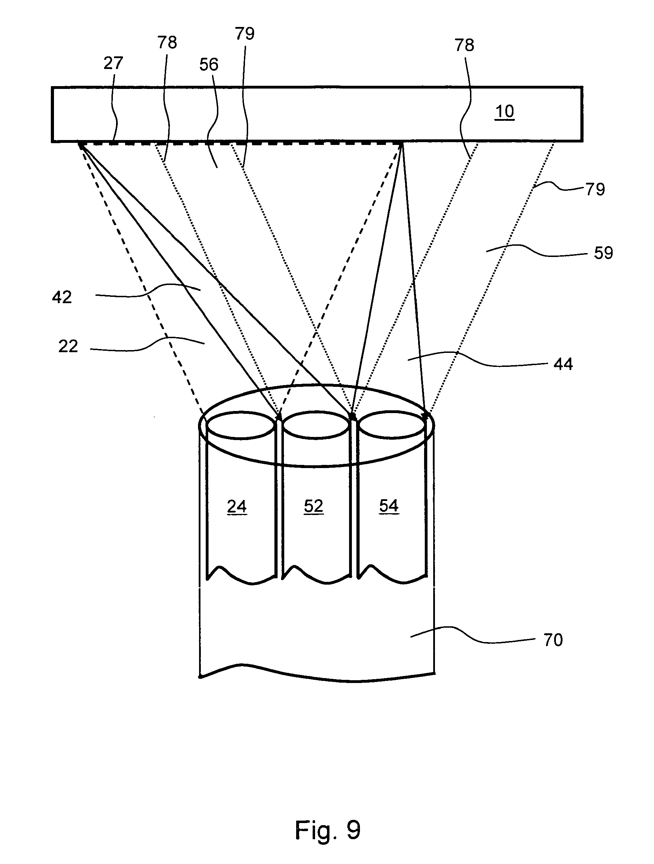

In Teilansichten ist in den Figuren 8 und 9 ein weiteres Ausführungsbeispiel eines erfindungsgemäßen Sensors gezeigt. Auch hier sind äquivalente Komponenten mit denselben mit denselben Bezugszeichen wie in den übrigen Figuren versehen. Das dort gezeigte Ausführungsbeispiel ist im Grundsatz ähnlich aufgebaut wie die in Fig. 4 gezeigte Variante. Neben einer optischen Sendefaser 24 sind eine erste optische Empfangsfaser 52 und eine zweite optische Empfangsfaser 54 in einer gemeinsamen Umhüllung oder Ummantelung 70 angeordnet.

Der wesentliche Unterschied im Vergleich zu dem in Fig. 4 gezeigten Ausführungsbeispiel besteht darin, dass bei der in den Figuren 8 und 9 gezeigten Variante keine Linsen verwendet werden. Unmittelbar ersichtlich ist aus den Figuren 8 und 9, dass bei der in Fig. 9 gezeigten Situation, bei welcher sich das Objekt 10 in einem größeren Abstand von den Faserenden befindet, ein wesentlich größerer Teil der von dem durch das Sendelicht 22 ausgeleuchteten Bereich 27 zurückgestrahlten Licht 44 in die außen liegende zweite Empfangsfaser 54 gelangt, als der bei in Fig. 8 gezeigten Situation, wo sich das Objekt 10 vergleichsweise nah an den Faserenden befindet.

Der Öffnungswinkel der ersten Empfangsfaser 52 ist mit gepunkteten Linien 78 angedeutet. Entsprechend ist der Öffnungswinkel für die zweite Empfangsfaser 54 mit gepunkteten Linien 79 veranschaulicht.

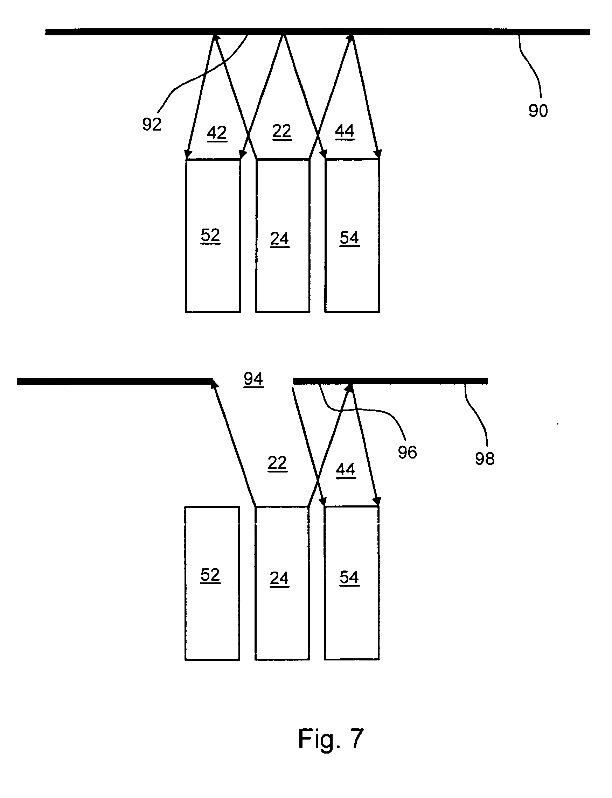

Ein Anwendungsbeispiel für einen erfindungsgemäßen optischen Sensor wird im Zusammenhang mit Fig. 7 erläutert. Gezeigt ist dort eine Verwendung des optischen Sensors zum Nachweis von Schnitten oder Rissen, allgemein von Öffnungen, in einem zu bedruckenden Papier. Diese Aufgabenstellung wird bisher mit einer Durchlichtanordnung gelöst, bei der auf den gegenüberliegenden Seiten des Papiers jedenfalls eine Sensorkomponente positioniert werden musste. Äquivalente Komponenten sind auch in Fig. 7 mit denselben Bezugszeichen wie in den übrigen Figuren versehen. In der im oberen Teil von Fig. 7 dargestellten Situation wird durch das von einer Sendefaser 24 ausgesandte Licht 22 ein Lichtfleck 92 auf einem zu untersuchenden Papier 90 generiert. Von diesem Lichtfleck 92 zurückgestrahltes Licht gelangt als Detektionslicht 42 in die ersten Empfangsfaser 52 und als Detektionslicht 44 in die zweite Empfangsfaser 54. Sowohl von der ersten Empfangsfaser 52 als auch von der zweiten Empfangsfaser 54 wird bei der im oberen Teil von Fig. 5 gezeigten Situation Licht empfangen, woraus die Steuer- und Auswerteeinheit dann auf ein unversehrtes Papier 90 schließen kann.

Im Unterschied dazu weist das im unteren Teil von Fig. 7 dargestellte Papier 98 einen Schnitt oder Riss 94 auf. Durch das von der Sendelichtfaser 24 ausgesandte Licht 22 wird deshalb nur noch ein vergleichsweise kleiner Lichtfleck 96 generiert. Wegen des im Hinblick auf die erste Empfangsfaser 52 zu großen Winkels gelangt von diesem Lichtfleck 96 kein Detektionslicht in die erste Empfangsfaser 52. In die zweite Empfangsfaser 54 kann jedoch, entsprechend der oberen Darstellung von Fig. 7, das Detektionslicht 44 eintreten. Der erfindungsgemäße optische Sensor liefert deshalb für die in Figur 7 unten dargestellte Situation ein großes Differenzsignal zwischen den durch die erste Empfangsfaser 52 und die zweite Empfangsfaser 54 transmittierten Intensitäten. Im Ergebnis können also Öffnungen, also Risse oder Schnitte 94 der in Fig. 7 unten gezeigten Art, mit dem erfindungsgemäßen optischen Sensor sehr gut nachgewiesen werden.

Mit der vorliegenden Erfindung wird ein neuartiger optischer Sensor bereitgestellt, bei dem in besonders eleganter Weise die Eigenschaften von optischen Fasern ausgenutzt und eine Hintergrundausblendung verwirklicht werden kann.

## Patentansprüche

1. Optischer Sensor zum Nachweis von Objekten in einem Überwachungsbereich, mit einer Sendeeinheit (20) zum Aussenden von Sendelicht (22) in den Überwachungsbereich (30),
mit einer Detektoreinheit (40) zum Nachweis von aus dem Überwachungsbereich (30) zurückgestrahltem Detektionslicht (42, 44) und
mit einer Steuer- und Auswerteeinheit (50) zum Ansteuern der Sendeeinheit (20) und zum Auswerten des von der Detektoreinheit (40) nachgewiesenen Detektionslichts (42, 44),
**dadurch gekennzeichnet,**
**dass** zum Leiten des Detektionslichts (42, 44) vom Überwachungsbereich (30) in Richtung der Detektoreinheit (40) mindestens eine erste optische Empfangsfaser (52) und mindestens eine zweite optische Empfangsfaser (54) vorhanden ist,
**dass** die Detektoreinheit (40) zum Nachweis von durch die erste optische Empfangsfaser (52) und die zweite optische Empfangsfaser (54) transmittierten Lichtintensitäten eingerichtet ist und
**dass** die erste optische Empfangsfaser (52) im Vergleich zur zweiten optischen Empfangsfaser (54) bezogen auf eine durch das Sendelicht (22) gegebene optische Achse (26) eine unterschiedliche abstandsabhängige Eintrittscharakteristik für aus dem Überwachungsbereich zurückgestrahltes Detektionslicht (42, 44) aufweist.

2. Sensor nach Anspruch 1,
**dadurch gekennzeichnet,**
**dass** zum Leiten des Sendelichts (22) in den Überwachungsbereich (30) mindestens eine optische Sendefaser (24) vorhanden ist.

3. Sensor nach Anspruch 1 oder 2,
**dadurch gekennzeichnet,**
**dass** die unterschiedliche abstandsabhängige Eintrittscharakteristik mindestens teilweise bereitgestellt wird durch unterschiedliche Anordnungsgeometrien der ersten optischen Empfangsfaser (52) und der zweiten optischen Empfangsfaser (54) bezüglich der optischen Achse (26).

4. Sensor nach einem der Ansprüche 1 bis 3,
**dadurch gekennzeichnet,**
**dass** die erste optische Empfangsfaser (52) im Vergleich zur zweiten optischen Empfangsfaser (54) bezüglich der optischen Achse (26) mit unterschiedlichem Abstand angeordnet ist.

5. Sensor nach einem der Ansprüche 1 bis 4,
**dadurch gekennzeichnet,**
**dass** zum Leiten des Sendelichts (22) in den Überwachungsbereich (30) vor einem Austrittsende mindestens einer Sendefaser (24) eine Linse (60) angeordnet ist.

6. Sensor nach einem der Ansprüche 1 bis 5,
**dadurch gekennzeichnet,**
**dass** zum Leiten von Detektionslicht (42, 44) in die erste Empfangsfaser (52) und die zweite Empfangsfaser (54) vor den Eintrittsenden mindestens einer ersten Empfangsfaser (52) und mindestens einer zweiten Empfangsfaser (54) eine Linse (62) angeordnet ist.

7. Sensor nach einem der Ansprüche 1 bis 6,
**dadurch gekennzeichnet,**
**dass** genau zwei Empfangsfasern (52, 54) vorhanden sind.

8. Sensor nach einem der Ansprüche 1 bis 7,
**dadurch gekennzeichnet**
**dass** die Sendefaser (24) und die Empfangsfasern (52, 54) in einer gemeinsamen Ummantelung (70) untergebracht sind.

9. Sensor nach einem der Ansprüche 1 bis 8,
**dadurch gekennzeichnet,**
**dass** die Sendefaser (24) und/oder die Empfangsfasern (52, 54) baugleiche Fasern sind.

10. Sensor nach einem der Ansprüche 1 bis 9,
**dadurch gekennzeichnet,**
**dass** die unterschiedliche abstandsabhängige Eintrittscharakteristik mindestens teilweise bereitgestellt wird durch unterschiedliche physikalische Eigenschaften der ersten optischen Empfangsfaser (52) und der zweiten optischen Empfangsfaser (54).

11. Sensor nach Anspruch 10,
**dadurch gekennzeichnet,**
**dass** die erste optische Empfangsfaser (52) und die zweite optische Empfangsfaser (54) unterschiedliche numerische Aperturen aufweisen.

12. Sensor nach einem der Ansprüche 1 bis 11,
**dadurch gekennzeichnet,**
**dass** die erste optische Empfangsfaser (52) bezüglich der optischen Achse (26) im Vergleich zur zweiten optischen Empfangsfaser (54) in einem unterschiedlichen Winkel angeordnet ist.

13. Sensor nach einem der Ansprüche 1 bis 12,
**dadurch gekennzeichnet,**
**dass** die Sendefaser (24) und die Empfangsfasern (52, 54) in derselben Richtung, insbesondere parallel, ausgerichtet sind.

14. Sensor nach einem der Ansprüche 1 bis 13,
**dadurch gekennzeichnet,**
**dass** eine Mehrzahl von ersten Empfangsfasern (52) und zweiten Empfangsfasern (54) vorhanden ist, wobei die ersten Empfangsfasern (52) mit einem ersten Abstand zur optischen Achse und die zweiten Empfangsfasern (54) mit einem zweiten Abstand zur optischen Achse (26) angeordnet sind und
wobei die ersten Empfangsfasern (52) mit einem geringeren radialen Abstand zur optischen Achse (26) angeordnet sind als die zweiten Empfangsfasern (54).

15. Sensor nach einem der Ansprüche 1 bis 14,
**dadurch gekennzeichnet,**
**dass** die Steuer- und Auswerteeinheit (50) zum Auswerten des von der Detektoreinheit (40) nachgewiesenen Detektionslichts (42, 44) auf Grundlage von eingelernten Werten und zum Abgeben eines binären Schaltsignals eingerichtet ist.
